# FASCICULE DE BREVET EUROPEEN

(11) **EP 2 304 249 B1**
(45) Date de publication et mention de la délivrance du brevet: **06.04.2016**
(21) Numéro de dépôt: 09769507.6
(22) Date de dépôt: 29.05.2009
(51) Int. Cl.: F15B 15/22, F15B 15/19, B60R 21/34

(54) **VERIN A COURSE DECLENCHEE, NOTAMMENT POUR SYSTEME DE SECURITE EQUIPANT UN VEHICULE AUTOMOBILE**
AKTUATOR MIT AUSGELÖSTEM HUB, INSBESONDERE FÜR EIN AN EINEM KRAFTFAHRZEUG ANGEBRACHTES SICHERHEITSSYSTEM
TRIPPED-TRAVEL ACTUATOR, PARTICULARLY FOR A SECURITY SYSTEM FITTED TO A MOTOR VEHICLE

(30) Priorité: 30.05.2008 FR 0853561
(43) Date de publication de la demande: 06.04.2011
(73) Titulaire: HERAKLES, 33185 Le Haillan (FR)
(72) Inventeur: BORG, Evrard, F-33127 Martignas sur Jalle (FR); LASPESA, Eric, F-84210 Althen des Paluds (FR); NADEAU, Jean-Paul, F-83190 Ollioules (FR)
(74) Mandataire: Intès, Didier Gérard André
(86) Numéro de dépôt international: PCT/FR2009/051021
(87) Numéro de publication internationale: WO 2009/156666

(56) Documents cités:
- EP-A- 1 186 786
- EP-A- 1 659 038
- WO-A-99/36230
- DE-A1- 3 727 666
- DE-A1- 10 301 401
- DE-U1- 20 214 904
- US-A- 5 427 214
- US-A1- 2005 000 352
- US-B1- 6 659 393

## Description

L'invention se rapporte à un vérin à course déclenchée et plus particulièrement à un agencement d'absorption d'énergie en fin de course, notamment destiné à être intégré à un système de sécurité ayant pour but de soulever le capot d'un véhicule automobile en cas de choc frontal avec un piéton. L'invention concerne plus particulièrement un perfectionnement d'un tel vérin afin d'améliorer son comportement et sa fiabilité en fin de course.

On connaît de DE 37 27 666 un système raidisseur de ceinture à déclenchement pyrotechnique pour un véhicule, comprenant un piston arrangé dans un corps qui, lorsqu'il est propulsé en réponse à une forte décélération du véhicule, se bloque définitivement dans le corps en le déformant.

Le brevet FR 2 878 212 décrit un système de sécurité pour la protection d'un piéton lorsque celui-ci est percuté par un véhicule automobile. Ce système comprend un mécanisme permettant de soulever rapidement le capot du véhicule automobile en cas de collision. En effet, lors d'un tel accident, la tête du piéton heurte fréquemment le capot du véhicule. Ce choc provoque des déformations du capot mais au-delà d'une certaine déformation, le capot entre en contact avec le bloc-moteur et toutes les pièces rigides qui l'entourent. C'est à ce moment que la tête du piéton subit la plus forte décélération et que des blessures graves sont à craindre. C'est pourquoi, on a mis au point un système mécanique pour soulever brusquement le capot d'une certaine hauteur de manière à éviter que la tête de la victime vienne heurter le bloc-moteur après la déformation du capot. Le soulèvement du capot est effectué au niveau de l'arrière de celui-ci, c'est-à-dire du côté du pare-brise, le capot restant articulé à l'avant du véhicule automobile.

Par exemple, un tel système de sécurité, actionné par des moyens de détection appropriés, permet de soulever la partie arrière du capot de 33 à 120 mm, selon les modèles, en un temps très bref de l'ordre de 30 ms, après la détection d'un choc imminent. Le soulèvement du capot articulé, en un temps aussi court, nécessite un vérin de forte puissance et à déplacement rapide (typiquement de 10 à 30 m/s). L'énergie à absorber en fin de course du piston est donc importante. A cet instant, l'arrêt brutal du piston du vérin peut conduire à des déformations ou ruptures mécaniques des éléments constituant le système de sécurité et le capot. De plus, si le système de déclenchement est actionné et que le choc est finalement évité par le conducteur, il est souhaitable que le capot puisse être remis en place. Pour ce faire, deux conditions sont requises. La première est que le mécanisme de soulèvement du capot ne soit pas compromises par un effet trop énergique du vérin. La seconde est que, après déclenchement, les éléments du vérin lui-même ne s'opposent pas à la remise en place du capot. Un autre vérin connu est divulgué dans le document US2005/0000352.

On recherche donc un vérin adapté au dispositif de sécurité de protection de piéton qui vient d'être décrit et ne présentant pas ces inconvénients, tout en restant compatible avec l'environnement mécanique du système de sécurité et avec les contraintes de montage et de coût, envisageables dans le domaine de l'automobile. L'invention permet d'atteindre cet objectif. L'idée de base de l'invention consiste donc à doter le vérin d'un système mécanique d'absorption d'énergie mécanique, plus particulièrement actif en fin de course et qui soit simple, peu coûteux et d'encombrement réduit.

A cet effet, l'invention concerne un vérin à course déclenchée comportant un corps abritant un ensemble mobile comprenant un piston et une tige faisant saillie à une extrémité dudit corps, ainsi que des moyens pour propulser ledit ensemble mobile en réponse à une commande de déclenchement, caractérisé en ce qu'il comporte un élément d'absorption d'énergie mécanique, du type à déformation ou dégradation mécanique définitive, agencé pour freiner ledit ensemble mobile sur au moins une partie de sa course, la déformation dudit élément d'absorption d'énergie étant provoquée par le déplacement même dudit ensemble mobile et l'agencement étant tel qu'il permette un retour provoqué dudit piston vers sa position initiale.

Typiquement l'effort propulsant l'ensemble mobile résulte de la pression régnant dans une chambre d'expansion de gaz ménagée dans le corps entre le piston et un générateur de gaz à actionnement pyrotechnique. On peut aussi utiliser un vérin à actionnement pneumatique.

De façon avantageuse, l'élément d'absorption d'énergie est installé à l'intérieur du vérin dans une chambre délimitée par le piston et renfermant la tige. Ce dispositif est actionné par le déplacement du piston, soit dès le début du déplacement dudit piston, soit, de préférence, après que le piston ait parcouru une course intermédiaire entre ses positions initiale et finale.

Par exemple, l'élément d'absorption d'énergie peut être constitué par un tube à paroi mince susceptible de se contracter axialement (en accordéon) entre le piston et une butée solidaire du corps.

Selon une autre possibilité, l'élément d'absorption peut être constitué par une portion crénelée ou filetée de la tige. Dans ce cas, la chambre renfermant la tige comporte deux parties, une première partie proche du piston où se situe ladite portion crénelée ou filetée et une seconde partie adjacente, de plus faible section. Ainsi, ladite portion crénelée ou filetée vient s'éroder en pénétrant dans cette seconde partie, lorsque la tige est déplacée. Cette détérioration de la tige provoque l'amortissement recherché.

Selon encore une autre variante, l'élément d'absorption est un tube et la chambre renfermant la tige, autour de laquelle se trouve le tube, comporte une première partie proche du piston et renfermant le tube et une seconde partie adjacente, de plus faible section. Le tube vient se déformer (se restreindre) dans cette seconde partie lorsqu'il y est poussé par le piston. Cette déformation provoque l'amortissement recherché.

Selon d'autres variantes possibles, l'élément d'absorption est constitué par une portion déformable de la paroi du corps lui-même.

Il est à noter que le dispositif objet de l'invention n'entraîne pas de blocage du vérin après que celui-ci ait été actionné et n'exerce aucune force de rappel en retour, après sa déformation. Néanmoins, il autorise le retour du piston vers sa position initiale sous l'effet d'une force extérieure, par exemple lorsqu'on souhaite refermer le capot.

Dans tous les cas, le dispositif selon l'invention fait appel à un élément d'absorption d'énergie par déformation ou dégradation mécanique définitive (sans retour élastique) tout en permettant un retour provoqué du piston. Ainsi, le vérin peut être équipé ou associé à des moyens d'amortissement en retour ou de remise en position.

L'invention sera mieux comprise et d'autres avantages de celle-ci apparaîtront mieux à la lumière de la description qui va suivre de plusieurs modes de réalisation possibles d'un vérin conforme à son principe, donnée uniquement à titre d'exemples et faite en référence aux dessins annexés, dans lesquels :
- la figure 1 est une vue schématique partielle en coupe d'un vérin conforme à l'invention ;
- la figure 2 est une vue semblable à la figure 1 après actionnement ;
- la figure 3 est une vue schématique illustrant une variante ;
- la figure 4 est une vue semblable à la figure 3 illustrant le vérin après actionnement ;
- la figure 5 illustre une autre variante ;
- la figure 6 est une vue semblable à la figure 5 après actionnement ;
- la figure 7 illustre encore une autre variante ;
- la figure 8 est une vue semblable à la figure 7 après actionnement ;
- la figure 9 illustre une autre variante ; et
- la figure 10 est une vue semblable à la figure 9 après actionnement.

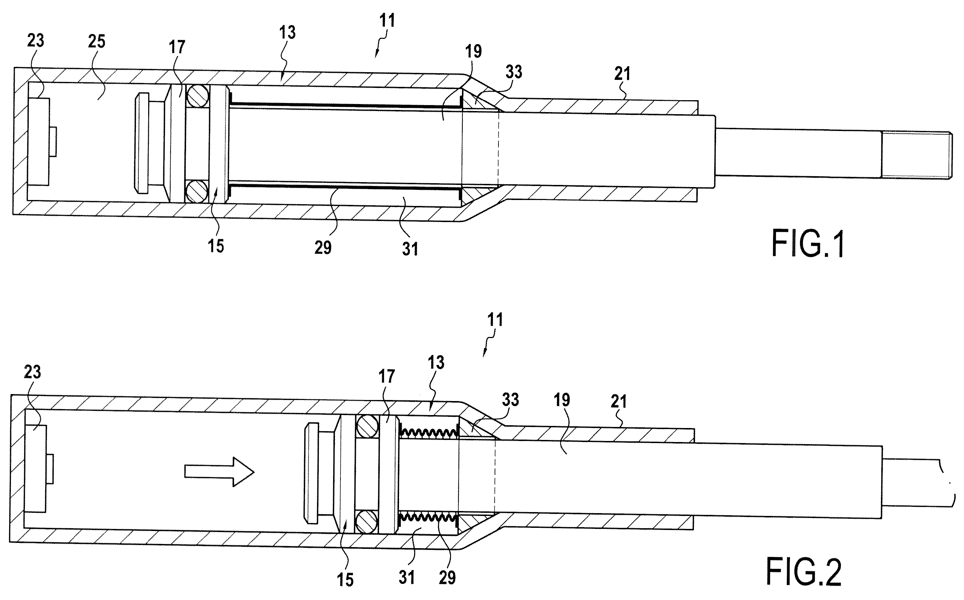

Sur les figures 1 et 2, on a représenté schématiquement un vérin à course déclenchée 11 comportant un corps cylindrique 13 abritant un ensemble mobile 15 constitué par un piston 17 et une tige 19 faisant saillie à une extrémité 21 du corps. A l'autre extrémité du corps, se trouve un générateur de gaz 23 à actionnement pyrotechnique. La chambre d'expansion de gaz 25 est définie entre ce générateur 25 et le piston 17.

Selon l'invention, le vérin est équipé d'un élément d'absorption d'énergie 29 déformable, agencé pour freiner ledit ensemble mobile sur au moins une partie de sa course. Dans l'exemple des figures 1 et 2, cet élément d'absorption d'énergie est installé à l'intérieur du vérin dans la chambre 31 renfermant la tige 19. Il s'agit ici d'un tube à paroi mince susceptible de se contracter axialement entre le piston 17 et une butée 33 solidaire du corps. Dans l'exemple, cette butée prend appui sur un rétrécissement dudit corps. La tige du vérin est guidée le long de la partie rétrécie du corps. Le tube est monté sur la tige 19 dans la chambre 31.

Lorsque le vérin est déclenché, l'ensemble mobile 15 constitué du piston 17 et de la tige 19 est propulsé dans un sens tendant à faire ressortir la tige vers l'extérieur du boîtier pour permettre l'actionnement du mécanisme de soulèvement du capot. Pendant cette course, le tube 29 se contracte axialement "en accordéon" provoquant l'amortissement recherché.

Dans la suite de la description, les éléments analogues portent les mêmes références numériques.

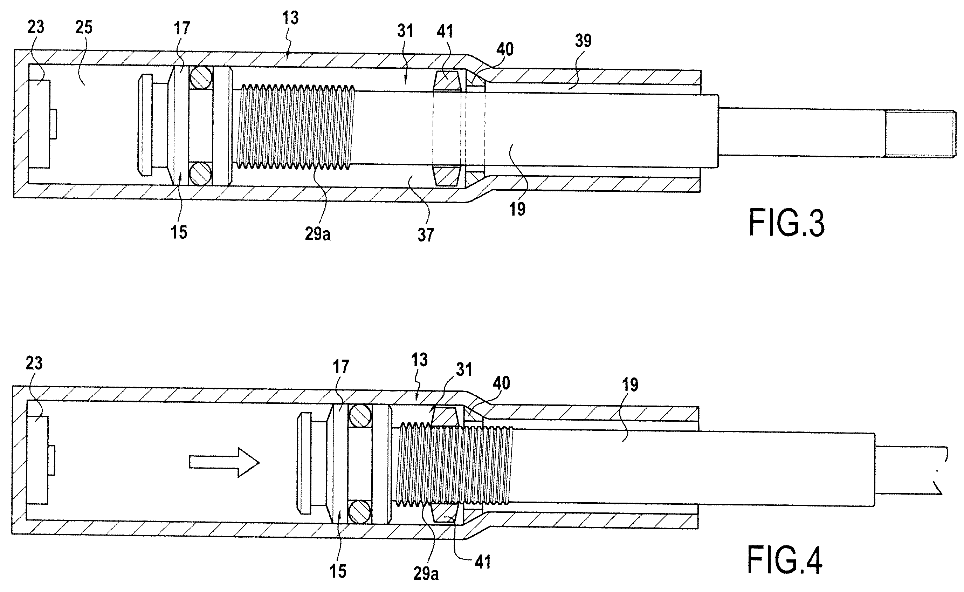

Ainsi, dans le mode de réalisation des figures 3 et 4, l'élément d'absorption est une portion 29a crénelée ou filetée de la tige 19 elle-même. De plus, la chambre 31 renfermant cette tige comporte une première partie 37 proche du piston et qui renferme cette portion 29a et une seconde partie 39 adjacente, de plus faible section. Ces deux parties sont séparées par un anneau 40 formant butée solidaire du corps 13. En outre un anneau 41 en matériau dur est monté coulissant autour de la tige dans la partie 37. Lors du déclenchement, cet anneau 41 est repoussé en butée contre l'anneau 40 par ladite portion crénelée ou filetée, de diamètre légèrement supérieur à celui de la tige. L'agencement est tel que la portion crénelée ou filetée vient s'éroder en pénétrant dans l'anneau 41 lors du déplacement de la tige. Cette détérioration provoque l'amortissement recherché. De plus, le retour arrière n'est pas entravé du fait que l'anneau 41 peut coulisser dans la chambre 31 même s'il reste attaché à la tige après le déclenchement.

En variante, le tube est supprimé et, en revanche, la tige comporte une portion crénelée ou filetée venant s'éroder en pénétrant dans la partie de plus faible section.

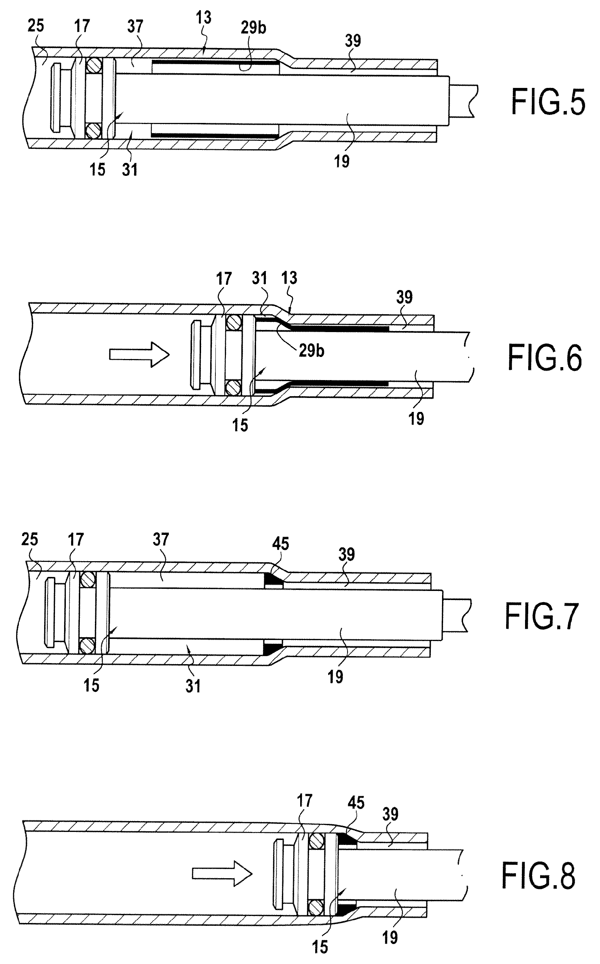

Dans le mode de réalisation des figures 5 et 6, le corps du vérin est semblable à celui du mode de réalisation des figures 3 et 4 et un tube 29b est monté autour de la tige dans la première partie 37 proche du piston. Ce tube vient se restreindre dans la seconde partie 39, adjacente, de la chambre 31, lorsqu'il y est poussé par le piston. Cette déformation du tube produit l'amortissement recherché.

Dans les modes de réalisation suivants, l'élément d'absorption est constitué par une portion déformable de la paroi 13 du corps de vérin.

Ainsi, selon les figures 7 et 8, la chambre 31 renfermant la tige comporte une première partie 37 proche du piston et une seconde partie 39 de section plus faible que celle de ladite première partie. Une butée annulaire 45 est placée entre ces deux parties. Lors de l'actionnement, le piston 17 repousse cette butée 45 et s'engage dans cette seconde partie 39 en provoquant une expansion, avec résistance, de la paroi du corps 13.

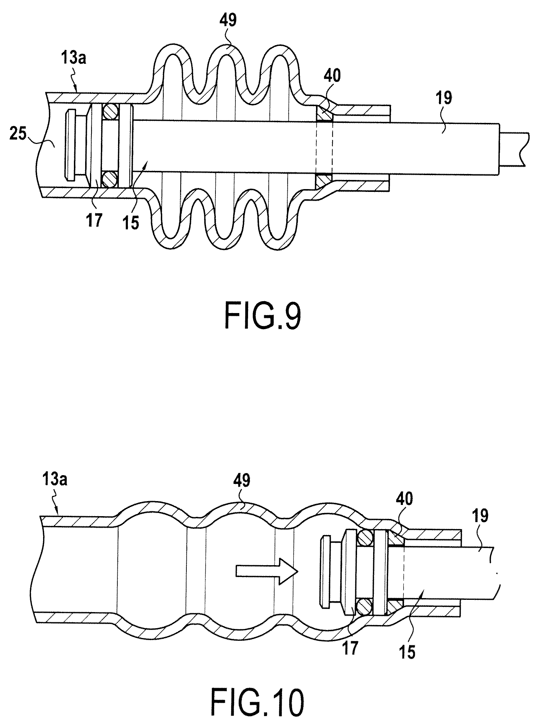

Dans le mode de réalisation des figures 9 et 10, la paroi du corps 13a comporte, d'origine, un tronçon ondulé 49, en soufflet, susceptible de s'étirer avec résistance sous la sollicitation du piston lors du déplacement de celui-ci. Cet étirement du corps du vérin provoque l'amortissement recherché.

Il est à noter que les moyens mécaniques d'absorption d'énergie qui viennent d'être décrits peuvent être adaptés à l'absorption de l'énergie de recul du piston. Par exemple, en référence aux figures 1 et 2, il suffirait d'installer le tube 29 dans la chambre 25. Les autres modes de réalisation peuvent être adaptés "en symétrie" dans la chambre 25.

## Revendications

1. Vérin à course déclenchée comportant un corps (13) abritant un ensemble mobile (15) comprenant un piston (17) et une tige (19) faisant saillie à une extrémité dudit corps, ainsi que des moyens pour propulser ledit ensemble mobile en réponse à une commande de déclenchement, **caractérisé en ce qu'**il comporte un élément d'absorption d'énergie mécanique (29, 49), du type à déformation mécanique définitive ou dégradation mécanique définitive, agencé pour freiner ledit ensemble mobile sur au moins une partie de sa course, la déformation dudit élément d'absorption d'énergie étant provoquée par le déplacement même dudit ensemble mobile et l'agencement étant tel que le corps (13) et le piston (17) restent libres l'un par rapport à l'autre après déformation de l'élément d'absorption (29, 49) de façon à permettre un retour provoqué dudit piston vers sa position initiale.

2. Vérin selon la revendication 1, **caractérisé en ce que** ledit élément d'absorption d'énergie (29) est installé à l'intérieur dudit vérin dans une chambre dudit corps renfermant ladite tige.

3. Vérin selon la revendication 2, **caractérisé en ce que** ledit élément d'absorption d'énergie est un tube (29) à paroi mince susceptible de se contracter axialement entre le piston et une butée solidaire dudit corps.

4. Vérin selon la revendication 2, **caractérisé en ce que** ledit élément d'absorption est constitué par une portion crénelée ou filetée de ladite tige et **en ce que** la chambre renfermant ladite tige comporte deux parties adjacentes de sections différentes, la portion crénelée ou filetée venant s'éroder contre un anneau (41) en matériau dur, en pénétrant dans la partie de plus faible section.

5. Vérin selon la revendication 2, **caractérisé en ce que** ledit élément d'absorption est un tube (29b) et **en ce que** la chambre renfermant la tige comporte une première partie (37) proche du piston et renfermant ledit tube et une seconde partie adjacente (39) de plus faible section, ledit tube venant se restreindre dans cette seconde partie lorsqu'il y est poussé par ledit piston.

6. Vérin selon la revendication 1, **caractérisé en ce que** ledit élément d'absorption est constitué par une portion déformable de la paroi dudit corps.

7. Vérin selon la revendication 6, **caractérisé en ce que** la chambre renfermant la tige comporte une première partie (37) proche du piston et une seconde partie (39) de section plus faible que ladite première partie et une butée annulaire (45) placée entre ces deux parties, le piston (17) repoussant cette butée et s'engageant dans cette seconde partie en provoquant une expansion de la paroi dudit corps.

8. Vérin selon la revendication 6, **caractérisé en ce que** la paroi dudit corps comporte un tronçon ondulé en soufflet (49), susceptible de s'étirer avec résistance sous la sollicitation du piston, lors du déplacement de celui-ci.

## Patentansprüche

1. Aktuator mit ausgelöstem Hub, welcher einen Körper (13) aufweist, in dem eine bewegliche Baugruppe (15), die einen Kolben (17) und eine an einem Ende des Körpers herausragende Kolbenstange (19) umfasst, sowie Mittel zum Antreiben dieser beweglichen Baugruppe in Reaktion auf einen Auslösebefehl angeordnet sind, **dadurch gekennzeichnet, dass** er ein Element zur Absorption mechanischer Energie (29, 49) des Typs, bei dem eine bleibende mechanische Verformung oder bleibende mechanische Beschädigung erfolgt, aufweist, das dafür ausgelegt ist, die bewegliche Baugruppe auf wenigstens einem Teil ihres Hubs zu bremsen, wobei die Verformung dieses Elements zur Absorption von Energie durch die Bewegung der beweglichen Baugruppe selbst hervorgerufen wird und die Anordnung eine solche ist, dass der Körper (13) und der Kolben (17) nach Verformung des Elements zur Absorption (29, 49) frei relativ zueinander bleiben, um eine hervorgerufene Rückkehr des Kolbens in seine Anfangsposition zu ermöglichen.

2. Aktuator nach Anspruch 1, **dadurch gekennzeichnet, dass** das Element zur Absorption von Energie (29) im Inneren des Aktuators in einer Kammer des Körpers eingebaut ist, welche die Kolbenstange enthält.

3. Aktuator nach Anspruch 2, **dadurch gekennzeichnet, dass** das Element zur Absorption von Energie ein Rohr (29) mit einer dünnen Wand ist, das dazu eingerichtet ist, zwischen dem Kolben und einem mit dem Körper fest verbundenen Anschlag axial zusammengedrückt zu werden.

4. Aktuator nach Anspruch 2, **dadurch gekennzeichnet, dass** das Element zur Absorption aus einem gerippten oder mit einem Gewinde versehenen Abschnitt der Kolbenstange besteht, und dadurch, dass die Kammer, welche die Kolbenstange enthält, zwei einander benachbarte Teile mit unterschiedlichen Querschnitten aufweist, wobei der gerippte oder mit einem Gewinde versehene Abschnitt an einem Ring (41) aus hartem Material abgescheuert wird, wenn er in den Teil mit kleinerem Querschnitt eindringt.

5. Aktuator nach Anspruch 2, **dadurch gekennzeichnet, dass** das Element zur Absorption ein Rohr (29b) ist, und dadurch, dass die Kammer, welche die Kolbenstange enthält, einen ersten Teil (37), der sich nahe dem Kolben befindet und das Rohr umschließt, und einen zweiten, benachbarten Teil (39) mit kleinerem Querschnitt aufweist, wobei das Rohr in diesem zweiten Teil eingeengt wird, wenn es von dem Kolben dorthin geschoben wird.

6. Aktuator nach Anspruch 1, **dadurch gekennzeichnet, dass** das Element zur Absorption aus einem verformbaren Abschnitt der Wand des Körpers besteht.

7. Aktuator nach Anspruch 6, **dadurch gekennzeichnet, dass** die Kammer, welche die Kolbenstange enthält, einen ersten Teil (37), der sich nahe dem Kolben befindet, und einen zweiten Teil (39), der einen kleineren Querschnitt als der erste Teil hat, sowie einen ringförmigen Anschlag (45), der zwischen diesen zwei Teilen angeordnet ist, aufweist, wobei der Kolben (17) diesen Anschlag zurückschiebt und in diesen zweiten Teil eingreift, wobei er eine Aufweitung der Wand des Körpers hervorruft.

8. Aktuator nach Anspruch 6, **dadurch gekennzeichnet, dass** die Wand des Körpers ein balgartig gewelltes Teilstück (49) aufweist, das dazu eingerichtet ist, sich bei Belastung durch den Kolben während der Bewegung desselben zu strecken und dabei einen Widerstand entgegenzusetzen.

## Claims

1. Tripped-travel actuator including a body (13) harboring a mobile assembly (15) comprising a piston (17) and a rod (19) protruding at one end of said body, as well as means for propelling said mobile assembly in response to a triggering command, **characterized in that** it includes an element (29, 49) for absorbing mechanical energy, of the type with definitive mechanical deformation or definitive mechanical degradation, laid out for braking said mobile assembly over at least one portion of its travel, the deformation of said energy absorption element being caused by the actual displacement of said mobile element and the layout being such that the body (13) and the piston (17) remain free relatively to each other after deformation of the absorption element (29, 49) so as to allow a caused return of said piston to its initial position.

2. The actuator according to claim 1, **characterized in that** said energy absorption element (29) is set up inside said actuator in a chamber of said body containing said rod.

3. The actuator according to claim 2, **characterized in that** said energy absorption element is a thin-walled tube (29) which may axially contract between the piston and an abutment secured to or integral with said body.

4. The actuator according to claim 2, **characterized in that** said absorption element is formed by a notched or threaded portion of said rod and **in that** the chamber containing said rod includes two adjacent portions with different sections, the notched or threaded portion being eroded against a ring (41) in hard material, by penetrating into the portion with the smallest section.

5. The actuator according to claim 2, **characterized in that** said absorption element is a tube (29b) and **in that** the chamber containing the rod includes a first portion (37) close to the piston and containing said tube and a second adjacent portion (39) with a smaller section, said tube being restricted in this second portion when it is urged therein by said piston.

6. The actuator according to claim 1, **characterized in that** said absorption element is formed with a deformable portion of the wall of said body.

7. The actuator according to claim 6, **characterized in that** the chamber containing the rod includes a first portion (37) close to the piston and a second portion (39) with a smaller section than said first portion and a ring-shaped abutment (45) placed between both of these portions, the piston (17) pushing back this abutment and engaging into this second portion and causing expansion of the wall of said body.

8. The actuator according to claim 6, **characterized in that** the wall of said body includes a corrugated bellows-shaped segment (49), which may stretch with resistance under the urge of the piston, during the displacement of the latter.
